# EUROPEAN PATENT SPECIFICATION

(11) **EP 0 952 543 B1**
(45) Date of publication and mention of the grant of the patent: **05.06.2002**
(21) Application number: 97946155.5
(22) Date of filing: 08.12.1997
(51) Int. Cl.: G06K 19/07, G06K 19/077

(54) **SEMICONDUCTOR DEVICE AND METHOD FOR MANUFACTURING THE SAME**
HALBLEITERANORDNUNG UND HERSTELLUNGSVERFAHREN
DISPOSITIF SEMI-CONDUCTEUR ET SON PROCEDE DE FABRICATION

(30) Priority: 17.12.1996 JP 33648596
(43) Date of publication of application: 27.10.1999
(73) Proprietor: ROHM CO., LTD., Kyoto-shi Kyoto 615 (JP)
(72) Inventor: OKADA, Hiroharu Rohm Co.,Ltd., Kyoto-shi Kyoto 615-8585 (JP)
(74) Representative: Prüfer, Lutz H., Dipl.-Phys.
(86) International application number: JP9704503
(87) International publication number: WO9826939

(56) References cited:
- JP-A- 5 054 209
- JP-A- 6 336 096
- JP-A- 8 216 570
- JP-A- 9 286 188
- JP-A- 62 041 096
- US-A- 5 294 290
- PATENT ABSTRACTS OF JAPAN vol. 199, no. 612 26 December 1996 & JP 08 216 570 A (HITACHI CHEM CO LTD) 27 August 1996

## Description

### Technical Field

The present invention relates generally to an aggregate IC card device and a manufacturing method of the same, and more particularly to a structure of a non-contact type IC card having no power supply, converting radio waves received by a built-in antenna coil to power, utilizing it as a power supply and transmitting/receiving an electric signal to/from an external data processing device and a manufacturing method of the same.

### Background Art

A non-contact type IC card has been proposed and has become available recently. The non-contact type IC card is provided with a semiconductor integrated circuit device (IC) for storing information (data) and receives/transmits information in a non-contact manner from/to an external data processing device that supplies or utilizes information. The non-contact type IC card can be applied as a carnet for ski lifts, a carnet or a season ticket for trains or buses, a tag for inventory control or the like. With the non-contact type IC cards, users do not need to pass the card through a card reader at a ticket barrier or the like as required. Only by carrying the card and passing near the data processing device such as a card examination device at the ticket barrier, confirmation and update of data can be achieved.

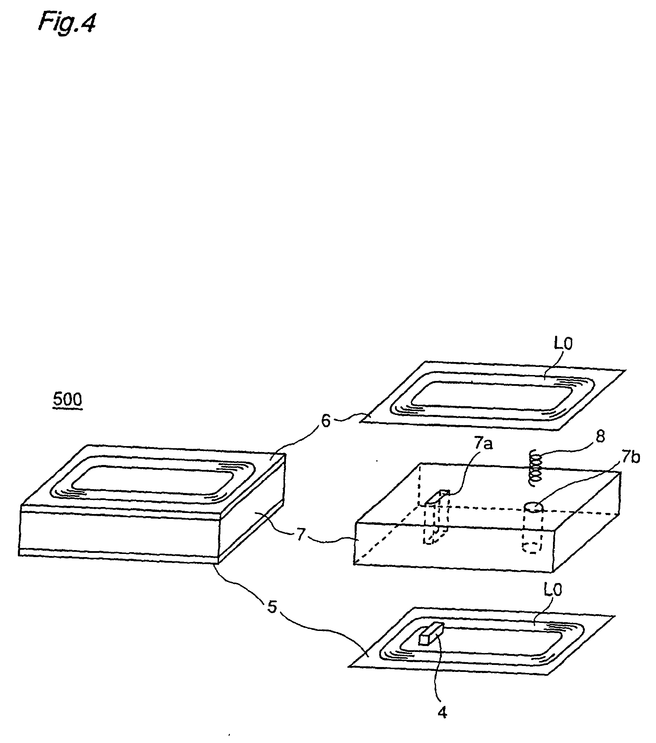

Fig. 4 shows an overall perspective view and an exploded perspective view of a non-contact type IC card as mentioned above (hereinafter referred to merely as "IC card").

As shown in Fig. 4, an IC card 500 includes two coil sheets 5 and 6, and a base member 7 placed therebetween. Base member 7 of a plastic material or the like, for example, is placed between two coil sheets 5 and 6 to secure a certain strength as an IC card. An electrically conductive layer L0 having a coil-like pattern is printed on a surface of each of coil sheets 5 and 6. Coil-like pattern electrically conductive layers L0 are connected to each other via a conduction member 8 such as a spring, thereby forming an antenna coil. Conduction member 8 is embedded in a conduction member hole 7b formed in base member 7. An electronic component 4 such as a microcomputer is placed and fit into a component mounting hole 7a formed in base member 7. Electronic component 4 is electrically connected to the antenna coil formed as described above.

Generally, the IC card with the above described structure does not include a built-in battery as a power supply. When the person or the object carrying the IC card passes near a data processing device such as a card examination device located at a ticket barrier in a skifield, the antenna coil receives radio waves sent from transmission means of the data processing device, then electronic component 4 detects the radio waves and a condenser is charged. Thus necessary power can be obtained. With the power thus obtained, a semiconductor device such as a microcomputer embedded in electronic component 4 can be driven and data on fee or the like can be rewritten. The status of use of the IC card can be confirmed through the data processing device by sending the rewritten data to the external data processing device. Therefore it is possible to pass and guide only the entitled persons and objects to a given direction.

As the data confirmation can be achieved through bi-directional transmission using radio waves in a non-contact manner, the user does not need to take the card out and insert the card into the data processing device every time he/she passes the ticket barrier or the like. Therefore the user can pass the ticket barrier faster and the congestion can be relaxed. The convenience of the IC card as described above makes it a prospective product for applications in various areas such as motorway fee confirmation.

The above described conventional IC card, however, has the following problems in terms of performance, cost, and productivity.

With respect to its performance, as the antenna coil is constituted only of two electrically conductive layers, that is, coil-like electrically conductive layers L0 printed on the surfaces of coil sheets 5 and 6, electromagnetic induction is weak and only a little power is obtained. Therefore, charge of sufficient power required for data processing such as data transmission takes a long time.

Second, with respect to its cost, in the antenna coil structure, base member 7 and conduction member 8 are necessary besides coil sheets 5 and 6. This raises the manufacturing cost.

Further, with respect to productivity, a step of mounting conduction member 8 is required and hinders improvement in productivity.

Still further, a problem in its appearance exists. As conduction member 8 such as a spring is employed for the electrical connection of two coil-like electrically conductive layers L0, a finished IC card product inevitably has an uneven surface.

In Patent Abstracts of Japan corresponding to JP 08216570 an IC card device is disclosed wherein an antenna coil is formed by overlapping a print coil formed on a thin plastic film in a plurality of layers. Each layer comprises a relief hole on a position corresponding to the IC. The relief hole is arranged outside the print coil.

In Patent Abstracts of Japan corresponding to JP 06336096 an IC card substrate is disclosed having a coil pattern formed on a printed board. The printed board has a hole surrounding an IC chip.

US 5,294,290 discloses a method of manufacturing conductive multi-turn spirals device wherein a first web and a second web each having conductive multi-turn spirals formed at a certain interval in longitudinal direction and a plurality of feed holes formed at a certain interval in the longitudinal direction are prepared and the first web and the second web are pulled out by two rollers whereby the rollers have a protrusion fitting into the feed holes and wherein one web is placed on the other web.

Hence, an object of the present invention to solve the above mentioned problems and to provide an aggregate IC card device from which an IC card is manufactured, with high performance, low cost, high productivity and enhanced strength and flexibility, and a manufacturing method thereof.

The object is solved by an IC card device according to claim 1 and by a manufacturing method according to claim 9.

### Disclosure of the Invention

The invention is defined by claims 1 and 9.

Preferably the first coil sheet has a front surface and a back surface, the first electrically conductive layer is formed on the front surface, the second coil sheet has a front surface and a back surface, the second electrically conductive layer is formed on the front surface, and the back surface of the second coil sheet is placed on the front surface of the first coil sheet.

In addition, preferably the front surface of the first coil sheet is glued to the back surface of the second coil sheet.

Further preferably, a first through hole electrically connected to the first electrically conductive layer is formed on the front surface of the first coil sheet and a second through hole electrically connected to the second electrically conductive layer is formed on the front surface of the second coil sheet. Here, the first electrically conductive layer and the second electrically conductive layer are electrically connected via the first through hole and the second through hole when the first coil sheet and the second coil sheet are placed one on another.

The first electrically conductive layer and the second electrically conductive layer electrically connected to each other as described above form an antenna coil.

Preferably the IC card device according to the present invention is an IC card converting radio waves received by the antenna coil formed as described above to power, utilizing the power as a power supply and transmitting/receiving an electric signal to/from an external data processing device.

In the IC card device according to the present invention, preferably, penetration holes communicating to each other when the first coil sheet and the second coil sheet are placed one on another are formed in the first coil sheet and the second coil sheet.

The IC card device according to the present invention preferably further includes an electronic component provided in the penetration hole.

In addition in the IC card device according to the present invention, preferably, the first electrically conductive layer and the second electrically conductive layer are printed on the first coil sheet and the second coil sheet, respectively.

The IC card device according to the present invention preferably further includes an upper sheet and a lower sheet respectively provided on and below the first coil sheet and the second coil sheet placed one on another so as to sandwich and cover the first coil sheet and the second coil sheet.

In the IC card device according to the present invention preferably the first coil sheet and the second coil sheet are glued to each other by adhesive.

In the semiconductor device such as an IC card with the structure as described above, as an antenna coil is formed by placing a plurality of coil sheets with coil-like pattern electrically conductive layers formed thereon one on another, a stronger electromagnetic induction is generated. Therefore, predetermined power required for data processing such as data transmission to/from the external data processing device, or data rewriting, can be obtained in a shorter time period.

In addition, in the IC card device of the present invention, a base member and a conduction member such as a spring are not necessary to electrically connect coil-like pattern electrically conductive layers to each other. Thus, the manufacturing steps can be simplified because the step of mounting a member other than the coil sheet is not required.

In addition, as the use of conduction member such as a spring is not necessary for electrically connecting coil-like pattern electrically conductive layers, no ups and downs are produced on the surface of the finished semiconductor device.

Thus in the IC card device according to the present invention, the same amount of power can be obtained in a shorter time period than in the conventional device. As a result, the distance required for obtaining the power necessary for data transmission, data processing or the like, that is the distance for the IC card to pass the external data processing device can be decreased. In addition, with the simplification of the manufacturing steps as described above, reduced manufacturing cost and the increased productivity can both be attained. Further, the ups and downs on the surface of the IC card can be reduced.

A manufacturing method of the IC card device according to the present invention includes the following steps.
(a) Step of preparing a first tape-like coil sheet and a second tape-like coil sheet each having a plurality of electrically conductive layers having coil-like patterns formed at a certain interval in a longitudinal direction and having a plurality of feed holes formed at a certain interval in the longitudinal direction.
(b) Step of pulling out the first tape-like coil sheet and the second tape-like coil sheet by a roller having a protrusion fitting into the feed hole so as to place the second tape-like coil sheet on the first tape-like coil sheet.
(c) Step of placing the first tape-like coil sheet on the second tape-like coil sheet pulled out at the step of pulling out.

The preferable method of manufacturing the IC card device according to the present invention further includes the step of forming an electronic component mounting hole penetrating the first tape-like coil sheet and the second tape-like coil sheet placed one on another. Here, the method of manufacturing the semiconductor device preferably further includes the step of providing an electronic component in the electronic component mounting hole.

Still further, the preferable method of manufacturing the IC card device according to the present invention further includes the step of placing a tape-like upper sheet and a tape-like lower sheet on and below the first tape-like coil sheet and the second tape-like coil sheet placed one on another so as to sandwich and cover the first tape-like coil sheet and the second tape-like coil sheet.

The preferable method of manufacturing the IC card device according to the present invention further includes the step of pulling out a portion of the first coil sheet and the second coil sheet placed one on another each including the coil-like pattern electrically conductive layer from the first tape-like coil sheet and the second tape-like coil sheet placed one on another.

The preferable method of manufacturing the IC card device according to the present invention further includes the step of applying adhesive on front surfaces of the first tape-like coil sheet and the second tape-like coil sheet prior to the step of pulling out the first tape-like coil sheet and the second tape-like coil sheet.

In the manufacturing method of the IC card device according to the present invention characterized as described above, a plurality of feed holes are formed on the tape-like coil sheet at a certain interval in a longitudinal direction as well as a plurality of coil-like pattern electrically conductive layers. Therefore, when tape-like coil sheets are placed one on another, tape-like coil sheets can be easily and securely aligned by a roller having a protrusion fitting in the feed hole. Thus, successive manufacturing of the semiconductor device such as the IC card is possible, whereby the mass production is allowed. Hence, the manufacturing cost of the semiconductor device can be reduced.

### Brief Description of the Drawings

Fig. 1 shows an overall perspective view and an exploded perspective view showing a schematic structure of an IC card according to one embodiment of the present invention.
Fig. 2 is a diagram schematically showing steps and being referenced for describing an example of a manufacturing method of the IC card according to one embodiment of the present invention.
Fig. 3A is a top view and Fig. 3B is a side view of a tape-like coil sheet employed in one example of the manufacturing method of the IC card of the present invention.
Fig. 4 shows an overall perspective view and an exploded perspective view showing a schematic structure of a conventional IC card.

### Best Modes for Carrying Out the Invention

Hereinafter, one embodiment of the present invention will be described with reference to the drawings.

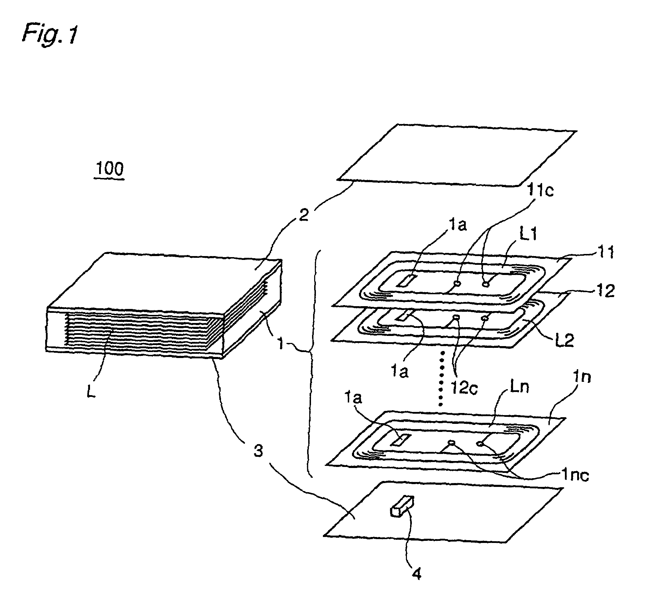

As shown in Fig. 1, an IC card 100 which is a semiconductor device according to one embodiment of the present invention includes an antenna portion 1, and an upper sheet 2 and a lower sheet 3 located on and below antenna portion 1 such that they sandwich and cover antenna portion 1. Antenna portion 1 is constituted of a plurality of coil sheets 11, 12, ··· 1n of synthetic resin placed one on another and having a thickness about a few hundred µm. Coil-like pattern electrically conductive layers L1, L2, ···, Ln are printed and formed on surfaces of coil sheets 11, 12, ···, 1n, respectively by photolithography or the like. In addition, through holes 11c, 12c, ···, 1nc are formed on surfaces of coil sheets 11, 12, 1n, respectively by photolithography or the like. Through holes 11c, 12c, ···, 1nc are electrically connected to coil-like electrically conductive layers L1, L2, ···, Ln, respectively through predetermined interconnection patterns. Coil-like electrically conductive layers L1, L2, ···, Ln of coil sheets 11, 12, ···, 1n are connected to coil-like electrically conductive layers of adjacent coil sheets via through holes 11c, 12c, ···, 1nc, respectively by multilayer interconnection technique employing an electrically conductive metal paste such as silver paste, thereby forming one antenna coil L.

In addition, a component mounting hole 1a is formed in each coil sheet in antenna portion 1. Component mounting holes 1a communicate with each other when coil sheets 11, 12, 1n are placed one on another. Electronic component 4 is mounted in component mounting hole 1a. Surfaces of antenna portion 1 are covered with upper sheet 2 and lower sheet 3 of the same material as the coil sheet.

Electronic component 4 is constituted of a microcomputer, a condenser, and so on for detecting radio waves transmitted from a source external to the IC card, obtaining the power and data, and transmitting data. Electronic component 4 is mounted on lower sheet 3 directly by a so-called COB (Chip On Board) technique or via a substrate by TAB (Tape Automated Bonding) technique. Further, electronic component 4 is electrically connected to an antenna coil L of antenna portion 1 via a wire bonding or a soldering bump formed in a pad.

As described above, in the IC card according to one embodiment of the present invention, antenna coil L is formed from coil-like electrically conductive layers L1, L2, ···, Ln, respectively printed on a plurality of coil sheets 11, 12, 1n, and whereby antenna portion 1 is formed. Therefore, the number of coil winds is larger than that in a conventional IC card, whereby a stronger electromagnetic induction can be generated.

In addition, antenna portion 1 has a relatively large strength and flexibility as the structure thereof includes a plurality of coil sheets. Hence, antenna portion 1 serves as the base member in the conventional IC card. In addition, coil-like electrically conductive layers L1, L2, ···, Ln of coil sheets 11, 12, ···, 1n are directly and electrically connected to each other via through holes formed in adjacent coil sheets. Therefore, in the IC card of the present invention, the base member and the conduction member such as a spring required in the conventional IC card are not necessary.

If an even stronger electromagnetic induction is needed in the IC card of the embodiment described above, coil sheets can be employed in place of upper sheet 2 and lower sheet 3.

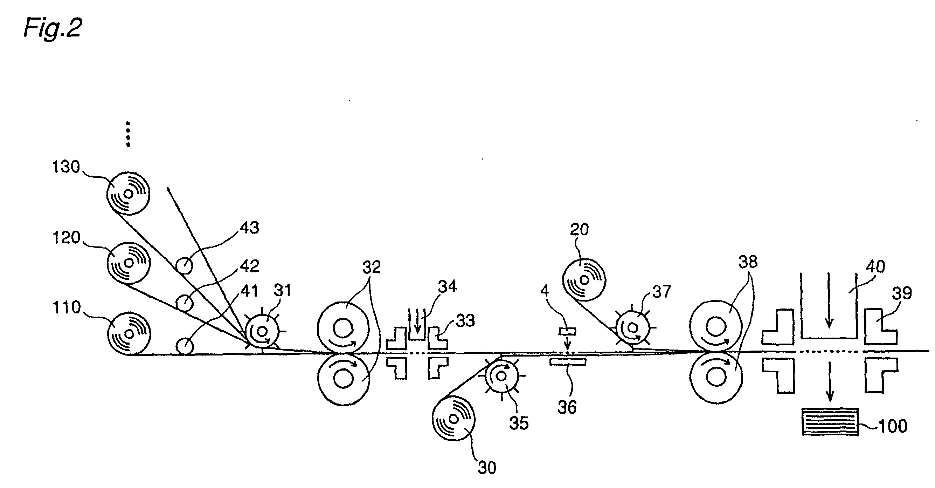

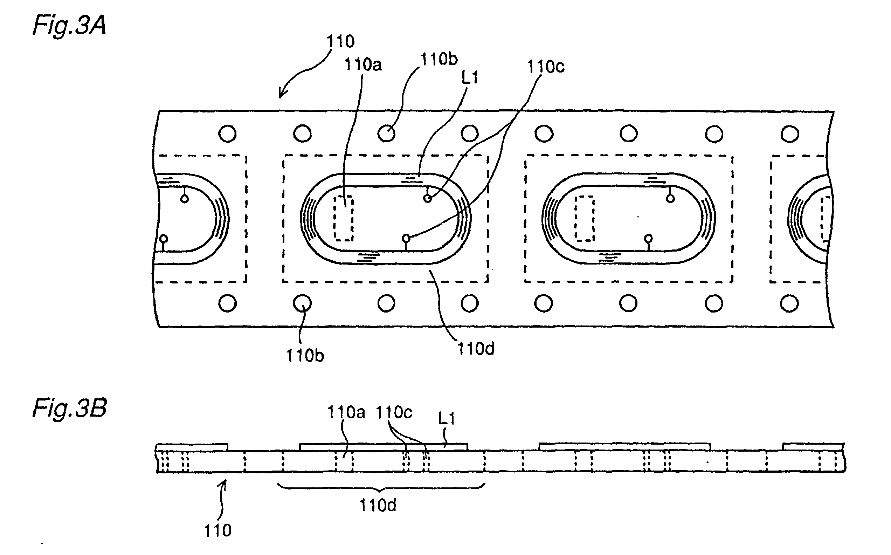

Next, an example of the manufacturing method of the IC card of the present invention will be described with reference to Figs. 2, 3A and 3B.

As shown in Fig. 2, first, rolls of tape-like coil sheets 110, 120 and 130 are prepared. Figs. 3A and 3B show a structure of tape-like coil sheet 110 as an example of each tape-like coil sheet. As shown in Figs. 3A and 3B, coil-like electrically conductive layers L1 are formed successively at a certain interval in a longitudinal direction on the surface of tape-like coil sheet 110. In addition, a through hole 110c is formed at an end of an interconnection pattern electrically connected to coil-like electrically conductive layer L1. Coil-like electrically conductive layer L1 and through hole 110c are successively printed on the surface of tape-like coil sheet 110 by photolithography. At either sides of coil-like electrically conductive layer L1, a plurality of feed holes 110b are formed at a certain interval in the longitudinal direction. Feed hole 110b is utilized for the alignment of tape-like coil sheet 110 and for feeding tape-like coil sheet 110 to the next step.

Similar to tape-like coil sheet 110 shown in Figs. 3A and 3B, a tape-like upper sheet 20 and a tape-like lower sheet 30 shown in Fig. 2 have feed holes corresponding to feed holes 110b and formed as rolls.

As shown in Fig. 2, a plurality of, preferably three to five, roll-like wound tape-like coil sheets 110, 120, 130, ··· are pulled out and adhesive is applied on surfaces thereof by adhesive applying rollers 41, 42, 43, Thereafter, a roller 31 having a protrusion fitting into feed hole 110b (see Fig. 3A) of tape-like coil sheets 110, 120, 130, ··· pulls out tape-like coil sheets 110, 120, 130, ···. Then, tape-like coil sheets 110, 120, 130, ··· are pressed and attached to each other by a pressure roller 32, whereby antenna portion 1 (see Fig. 1) is formed.

Next, antenna portion 1 is held by a gripping device 33 at upper and lower surfaces and punched by a punching device 34. Thus, a first punched portion 110a shown by a dotted line in Figs. 3A and 3B is punched through. Component mounting hole 1a (see Fig. 1) is thus formed in antenna portion 1.

Antenna portion 1 and tape-like lower sheet 30 wound like a roll are pulled out by a roller 35 having a protrusion fitting into the feed hole, and electronic component 4 is mounted thereon at a support base 36.

Further, together with antenna portion 1 and tape-like lower sheet 30, tape-like upper sheet 20 wound like a roll is pulled out by a roller 37 having a protrusion fitting into each feed hole of the tape-like coil sheet, the tape-like upper sheet and the tape-like lower sheet, and then a pressure roller 38 presses and attaches them to each other.

Then the successively formed tape-like IC card is held at its upper surface and lower surface by a gripping device 39 and punched by a punching device 40. Thus, a second punched portion 110d shown by a dotted line in Figs. 3A and 3B are punched through, whereby a separate IC card 100 (see Fig. 1) is obtained.

In addition, a step of forming component mounting hole 1a in antenna portion 1 can be eliminated by using sheets with component mounting hole 1a previously formed thereon as tape-like coil sheets 110, 120, 130, ···. Although in the embodiment described above, electronic component 4 is arranged inside coil-like electrically conductive layers L1, L2, ···, Ln, electronic component can be arranged outside the coil-like electrically conductive layer. The number of tape-like coil sheets placed one on another can be optionally set according to the thickness of designed IC card 100 and the amount of power required for data transmission, data processing, and so on. In addition, tape-like coil sheets 110, 120, 130, ··· may be glued to each other by fusion according to the humidity in atmosphere.

In the manufacturing method of the IC card described above, at the manufacture of the IC card of the present invention, the alignment of the plurality of coil sheets 11, 12, ···, 1n to be placed one on another and the alignment of antenna portion 1 and upper and lower sheets 2 and 3 can be easily and securely performed and successive manufacturing is allowed.

### Industrial Applicability

The semiconductor device according to the present invention can be applied as a non-contact type IC card, such as a carnet of ski lift, carnets and season tickets of trains and buses, or a tag for inventory control, allowing data confirmation and update without making contact with the external data processing device.

## Claims

1. An aggregate IC card device comprising at least two tape-like coil sheets (110, 120,....) placed on each other, each of the tape-like coil sheets having a plurality of electrically conductive layers (L1) with coil-like patterns formed at a certain interval in a longitudinal direction and having a plurality of feed holes (110b) formed at a certain interval in the longitudinal direction,
wherein an electronic component mounting hole (110a) is formed surrounded by each conductive layer (L1) and penetrating at least one of said at least two tape-like coil sheets placed on each other, and an electronic component (4) provided in said electronic component mounting hole (110a).

2. The IC card device according to claim 1, wherein a first coil sheet of said at least two tape like coil sheets has a front surface and a back surface, and a first electrically conductive layer (L2) is formed on the front surface,
a second coil sheet (11) of said at least two tape like coil sheets has a front surface and a back surface, and a second electrically conductive layer (L1) is formed on the front surface, and
the back surface of said second coil sheet (11) is placed on the front surface of said first coil sheet (12).

3. The IC card device according to claim 2, wherein the front surface of said first coil sheet (12) is glued to the back surface of said second coil sheet (11) or wherein
a first through hole (12c) electrically connected to said first electrically conductive layer (L2) is formed on the front surface of said first coil sheet (12) and a second through hole (11c) electrically connected to said second electrically conductive layer (L1) is formed on the front surface of said second coil sheet (11), and
said first electrically conductive layer (L2) and said second electrically conductive layer (L1) are electrically connected via said first through hole (12c) and said second through hole (11c) when said first coil sheet (12) and said second coil sheet (11) are placed one on another.

4. The IC card device according to claim 3, wherein an antenna coil (L) is formed by said first electrically conductive layer (L2) and said second electrically conductive layer (L1) electrically connected to each other.

5. The IC card device according to claim 4, wherein semiconductor device is an IC card (100) converting radio waves received by said antenna coil (L) to power, utilizing the power as a power supply and transmitting/receiving an electric signal to/from an external data processing device.

6. The IC card device according to claim 2, wherein penetration holes (1a) communicating to each other when said first coil sheet (12) and said second coil sheet (11) are placed one on another are formed in said first coil sheet (12) and said second coil sheet (11), respectively.

7. The IC card device according to claim 6, further comprising an electronic component (4) provided in said penetration hole (1a).

8. The IC card device according to claim 2, wherein said first electrically conductive layer (L2) and said second electrically conductive layer (L1) are printed on said first coil sheet (12) and said second coil sheet (11), respectively, or wherein
the IC card device further comprises an upper sheet (2) and a lower sheet (3), respectively provided on and below said first coil sheet (12) and said second coil sheet (11) placed one on another so as to sandwich and cover said first coil sheet (12) and said second coil sheet (11), or wherein
said first coil sheet (12) and said second coil sheet (11) are glued to each other by adhesive.

9. A method of manufacturing an IC card device comprising the steps of:
preparing a first tape-like coil sheet (110) and a second tape-like coil sheet (120) each having a plurality of electrically conductive layers (L1) having coil-like patterns formed at a certain interval in a longitudinal direction and having a plurality of feed holes (110b) formed at a certain interval in the longitudinal direction;
pulling out said first tape-like coil sheet (110) and said second tape-like coil sheet (120) by a roller (31) having a protrusion fitting into said feed hole (110b) so as to place said second tape-like coil sheet (120) on said first tape-like coil sheet (110);
placing said first tape-like coil sheet (110) on said second tape-like coil sheet (120) pulled out at the step of pulling out;
forming an electronic component mounting hole (110a) surrounded by each couductive layer (L1) and penetrating said first tape-like coil sheet (110) and said second tape-like coil sheet (120) placed one on another; and
providing an electronic component (4) in said electronic component mounting hole (110a).

10. The method of manufacturing the IC card device according to claim 9, further comprising the steps of placing a tape-like upper sheet (20) and a tape-like lower sheet (30), respectively on and below said first tape-like coil sheet (110) and said second tape-like coil sheet (120) placed one on another so as to sandwich and cover said first tape-like coil sheet (110) and said second tape-like coil sheet (120).

11. The method of manufacturing the IC card device according to claim 10, further comprising the step of pulling out a portion of the first coil sheet and the second coil sheet placed one on another each including said coil-like pattern electrically conductive layer (L1), from said first tape-like coil sheet (110) and said second tape-like coil sheet (120) placed one on another, or further comprising the step of applying adhesive on front surfaces of said first tape-like coil sheet (110) and said second tape-like coil sheet (120) prior to the step of pulling out said first tape-like coil sheet (110) and said second tape-like coil sheet (120).

## Patentansprüche

1. Verbund-IC-Karteneinrichtung mit wenigstens zwei bandartigen Spulenfolien (110, 120, ...), die aufeinander plaziert sind, wobei jede der bandartigen Spulenfolien eine Mehrzahl von elektrisch leitenden Schichten (L1) mit in einem bestimmten Abstand in eine Längsrichtung gebildeten spulenartigen Mustern und einer Mehrzahl von in einem bestimmten Abstand in der Längsrichtung gebildeten Vorschublöchern (110b) aufweist,
wobei ein Befestigungloch (110a) für eine elektronische Komponente gebildet ist, das von jeder leitenden Schicht (L1) umgeben ist und das wenigstens eine der wenigstens zwei bandartigen aufeinander plazierten Spulenfolien durchdringt, und wobei eine elektronische Komponente (4) in dem Befestigungloch (110a) für die elektronische Komponente vorgesehen ist.

2. IC-Karteneinrichtung nach Anspruch 1, wobei eine erste Spulenfolie (12) der wenigstens zwei bandartigen Spulenfolien eine Vorderfläche und eine Rückfläche aufweist und eine erste elektrisch leitende Schicht (L2) auf der Vorderfläche gebildet ist, eine zweite Spulenfolie (11) der wenigstens zwei bandartigen Spulenfolien eine Vorderfläche und eine Rückfläche hat und eine zweite elektrisch leitende Schicht (L1) auf der Vorderfläche gebildet ist, und
die Rückfläche der zweiten Spulenfolie (11) auf der Vorderfläche der ersten Spulenfolie (12) angeordnet ist.

3. IC-Karteneinrichtung nach Anspruch 2, wobei die Vorderfläche der ersten Spulenfolie (12) auf die Rückfläche der zweiten Spulenfolien (11) geklebt ist oder wobei
ein erstes Durchgangsloch (12c), das elektrisch mit der ersten elektrisch leitenden Schicht (L2) verbunden ist, auf der Vorderfläche der ersten Spulenfolie (12) gebildet ist und ein zweites Durchgangsloch (11c), das elektrisch mit der zweiten elektrisch leitenden Schicht (L1) verbunden ist, auf der Vorderfläche der zweiten Spulenfolie (11) gebildet ist, und
die erste elektrisch leitende Schicht (L2) und die zweite elektrisch leitende Schicht (L1) elektrisch mit dem ersten Durchgangsloch (12c) und dem zweiten Durchgangsloch (11c) verbunden sind, wenn die erste Spulenfolie (12) und die zweite Spulenfolie (11) aufeinander angeordnet sind.

4. IC-Karteneinrichtung nach Anspruch 3, wobei die Antennenspule (L) durch die erste elektrisch leitende Schicht (L2) und die zweite elektrisch leitende Schicht (L1), die elektrisch miteinander verbunden sind, gebildet ist.

5. IC-Karteneinrichtung nach Anspruch 4, wobei die Halbleitereinrichtung eine IC-Karte (100) ist, die Radiowellen, die von der Antennenspule (L) empfangen werden, in Leistung umwandelt unter Verwendung der Leistung als Spannungsversorgung und die ein elektrisches Signal überträgt/empfängt an eine/von einer externen Datenverarbeitungseinrichtung.

6. IC-Karteneinrichtung nach Anspruch 2, wobei Durchdringungslöcher (1a), die miteinander in Verbindung stehen, wenn die erste Spulenfolie (12) und die zweite Spulenfolie (11) aufeinander plaziert sind, in der ersten Spulenfolie (12) und der zweiten Spulenfolie (11) jeweils gebildet sind.

7. IC-Karteneinrichtung nach Anspruch 6, weiter mit einer elektronischen Komponente (4), die in dem Durchdringungsloch (1a) vorgesehen ist.

8. IC-Karteneinrichtung nach Anspruch 2, wobei die erste elektrisch leitende Schicht (L2) und die zweite elektrisch leitende Schicht (L1) auf der ersten Spulenfolie (12) und der zweiten Spulenfolie (11) jeweils gedruckt sind, oder wobei
die IC-Karteneinrichtung weiter eine obere Folie (2) und eine untere Folie (3) aufweist, die jeweils auf und unter der ersten Spulenfolie (12) und der zweiten Spulenfolie (11), die aufeinander plaziert sind, derart vorgesehen sind, daß sie die erste Spulenfolie (12) und die zweite Spulenfolie (11) einschließen und bedecken, oder wobei
die erste Spulenfolie (12) und zweite Spulenfolie (11) durch einen Klebstoff miteinander verklebt sind.

9. Verfahren zur Herstellung einer IC-Karteneinrichtung mit den Schritten:
Vorbereiten einer ersten bandartigen Spulenfolie (110) und einer zweiten bandartigen Spulenfolie (120), wobei jede eine Mehrzahl von elektrisch leitenden Schichten (L1) mit spulenartigen in einem bestimmten Abstand in einer Längsrichtung gebildeten Mustern und eine Mehrzahl von Vorschublöchern (110b), die in einem bestimmten Abstand in der Längsrichtung gebildet sind, aufweist;
Herausziehen der ersten bandartigen Spulenfolie (110) und der zweiten bandartigen Spulenfolie (120) durch eine Walze (31), die einen Vorsprung aufweist, der in das Vorschubloch (110b) paßt, derart, daß die zweite bandartige Spulenfolie (120) auf der ersten bandartigen Spulenfolie (110) plaziert wird;
Plazieren der ersten bandartigen Spulenfolie (110) auf der zweiten bandartigen Spulenfolie (120), die bei dem Schritt des Herausziehens herausgezogen worden sind;
Bilden eines Befestigungsloches (110a) für eine elektronische Komponente, das durch jede leitende Schicht (L1) umgeben ist und das die erste bandartige Spulenfolie (110) und zweite bandartige Spulenfolie (120), die aufeinander angeordnet sind, durchdringt; und
Vorsehen einer elektronischen Komponente (4) in dem Befestigungsloch (110a) für die elektronische Komponente.

10. Verfahren zum Herstellen der IC-Karteneinrichtung nach Anspruch 9, weiter mit dem Schritt des Plazierens einer bandartigen oberen Folie (20) und einer bandartigen unteren Folie (30) jeweils auf und unter der ersten bandartigen Spulenfolie (110) und der zweiten bandartigen Spulenfolie (120), die aufeinander plaziert sind, derart, daß die erste bandartige Spulenfolie (110) und die zweite bandartige Spulenfolie (120) dazwischen geschichtet und bedeckt sind.

11. Verfahren zum Herstellen der IC-Karteneinrichtung nach Anspruch 10, weiter mit dem Schritt des Herausziehens eines Abschnitts der aufeinander plazierten ersten Spulenfolie und der zweiten Spulenfolie, wobei jede die elektrisch leitende Schicht (L1) mit dem spulenartigen Muster aufweist, von der ersten bandartigen Spulenfolie (110) und der zweiten bandartigen Spulenfolie (120), die aufeinander plaziert sind, oder weiter mit dem Schritt des Aufbringens eines Klebstoffes auf die Vorderflächen der ersten bandartigen Spulenfolie (110) und der zweiten bandartigen Spulenfolie (120) vor dem Schritt des Herausziehens der ersten bandartigen Spulenfolie (110) und der zweiten bandartigen Spulenfolie (120).

## Revendications

1. Un dispositif consistant en une carte à circuilt intégré à structure assemblée, comprenant au moins deux feuilles de bobines semblables à des bandes (110, 120, ...) placées l'une sur l'autre, chacune des feuilles de bobines semblables à des bandes ayant une multiplicité de couches conductrices de l'électricité (L1) avec des motifs semblables à des bobines formés à un certain intervalle dans une direction longitudinale et ayant une multiplicité de trous d'avance (110b) formés à un certain intervalle dans la direction longitudinale,
dans laquelle un trou de montage de composant électronique (110a) est formé de façon à être entouré par chaque couche conductrice (L1) et pénètre dans l'une au moins des au moins deux feuilles de bobines semblables à des bandes placées l'une sur l'autre, et un composant électronique (4) est placé dans le trou de montage de composant électronique (110a).

2. Le dispositif consistant en une carte à circuit intégré selon la revendication 1, dans lequel
une première feuille de bobines (12) des au moins deux feuilles de bobines semblables à des bandes a une surface avant et une surface arrière, et une première couche électriquement conductrice (L2) est formée sur la surface avant,
une seconde feuille de bobines (11) des au moins deux feuilles de bobines semblables à des bandes a une surface avant et une surface arrière, et une seconde couche électriquement conductrice (L1) est formée sur la surface avant, et
la surface arrière de la seconde feuille de bobines (11) est placée sur la surface avant de la première feuille de bobines (12).

3. Le dispositif consistant en une carte à circuit intégré selon la revendication 2, dans lequel la surface avant de la première feuille de bobines (12) est collée sur la surface arrière de la seconde feuille de bobines (11), ou dans lequel
un premier trou traversant (12c) connecté électriquement à la première couche électriquement conductrice (L2) est formé sur la surface avant de la première feuille de bobines (12), et un second trou traversant (11c) connecté électriquement à la seconde couche électriquement conductrice (L1) est formé sur la surface avant de la seconde feuille de bobines (11), et
la première couche électriquement conductrice (L2) et la seconde couche électriquement conductrice (L1) sont connectées électriquement par l'intermédiaire du premier trou traversant (12c) et du second trou traversant (11c) lorsque la première feuille de bobines (12) et la seconde feuille de bobines (11) sont placées l'une sur l'autre.

4. Le dispositif consistant en une carte à circuit intégré selon la revendication 3, dans lequel une bobine d'antenne (L) est formée par la première couche électriquement conductrice (L2) et la seconde couche électriquement conductrice (L1) connectées électriquement l'une à l'autre.

5. Le dispositif consistant en une carte à circuit intégré selon la revendication 4, dans lequel le dispositif à semiconducteur est une carte à circuit intégré (100) convertissant en énergie des ondes de radio reçues par la bobine d'antenne (L), utilisant l'énergie comme une alimentation, et émettant/recevant un signal électrique en relation avec un dispositif de traitement de données externe.

6. Le dispositif consistant en une carte à circuit intégré selon la revendication 2, dans lequel des trous de pénétration (1a) communiquant ensemble lorsque la première feuille de bobines (12) et la seconde feuille de bobines (11) sont placées l'une sur l'autre, sont formés respectivement dans la première feuille de bobines (12) et la seconde feuille de bobines (11).

7. Le dispositif consistant en une carte à circuit intégré selon la revendication 6, comprenant en outre un composant électronique (4) placé dans le trou de pénétration (1a).

8. Le dispositif consistant en une carte à circuit intégré selon la revendication 2, dans lequel la première couche électriquement conductrice (L2) et la seconde couche électriquement conductrice (L1) sont imprimées respectivement sur la première feuille de bobines (12) et la seconde feuille de bobines (11), ou dans lequel
le dispositif consistant en une carte à circuit intégré comprend en outre une feuille supérieure (2) et une feuille inférieure (3), respectivement placées sur et sous la première feuille de bobines (12) et la seconde feuille de bobines (11) placées l'une sur l'autre, de façon à enserrer et couvrir la première feuille de bobines (12) et la seconde feuille de bobines (11), ou dans lequel
la première feuille de bobines (12) et la seconde feuille de bobines (11) sont collées l'une à l'autre par un adhésif.

9. Un procédé de fabrication d'un dispositif consistant en une carte à circuit intégré, comprenant les étapes suivantes :
on prépare une première feuille de bobines semblable à une bande (110) et une seconde feuille de bobines semblable à une bande (120) ayant chacune une multiplicité de couches électriquement conductrices (L1) ayant des motifs semblables à des bobines formés à un certain intervalle dans une direction longitudinale et ayant une multiplicité de trous d'avance (110b) formés à un certain intervalle dans la direction longitudinale;
on dévide la première feuille de bobines semblable à une bande (110) et la seconde feuille de bobines semblable à une bande (120) avec un rouleau (31) ayant un picot pénétrant dans le trou traversant (110b) de façon à placer la seconde feuille de bobines semblable à une bande (120) sur la première feuille de bobines semblable à une bande (110);
on place la première feuille de bobines semblable à une bande (110) sur la seconde feuille de bobines semblable à une bande (120) dévidée à l'étape de dévidage;
on forme un trou de montage de composant électronique (110a) entouré par chaque couche conductrice (L1) et pénétrant dans la première feuille de bobines semblable à une bande (110) et la seconde feuille de bobines semblable à une bande (120) placées l'une sur l'autre; et
on place un composant électronique (4) dans le trou de montage de composant électronique (110a).

10. Le procédé de fabrication d'un dispositif consistant en carte à circuit intégré selon la revendication 9, comprenant en outre les étapes qui consistent à placer une feuille supérieure semblable à une bande (20) et une feuille inférieure semblable à une bande (30), respectivement sur et sous la première feuille de bobines semblable à une bande (110) et la seconde feuille de bobines semblable à une bande (120) placées l'une sur l'autre, de façon à enserrer et recouvrir la première feuille de bobines semblable à une bande (110) et la seconde feuille de bobines semblable à une bande (120).

11. Le procédé de fabrication du dispositif consistant en une carte à circuit intégré selon la revendication 10, comprenant en outre l'étape consistant à dévider une partie de la première feuille de bobines et de la seconde feuille de bobines placées l'une sur l'autre, incluant chacune la couche électriquement conductrice (L1) avec des motifs semblables à des bobines, à partir de la première feuille de bobines semblable à une bande (110) et de la seconde feuille de bobines semblable à une bande (120) placées l'une sur l'autre, ou comprenant en outre l'étape consistant à appliquer un adhésif sur des surfaces avant de la première feuille de bobines semblable à une bande (110) et de la seconde feuille de bobines semblable à une bande (120), avant l'étape consistant à dévider la première feuille de bobines semblable à une bande (110) et la seconde feuille de bobines semblable à une bande (120).
